# EUROPEAN PATENT SPECIFICATION

(11) **EP 3 212 707 B1**
(45) Date of publication and mention of the grant of the patent: **22.08.2018**
(21) Application number: 14799300.0
(22) Date of filing: 31.10.2014
(51) Int. Cl.: C08K 3/04, C08L 91/00, C08L 9/00, C08K 5/14, C08L 9/06, B60C 1/00

(54) **TREAD FOR A TIRE FORMED FROM RUBBER COMPOSITION CURED WITH PEROXIDE**
LAUFFLÄCHE FÜR EINEN REIFEN AUS EINER PEROXIDGEHÄRTETEN KAUTSCHUKZUSAMMENSETZUNG
BANDE DE ROULEMENT POUR PNEU FORMÉE D'UNE COMPOSITION DE CAOUTCHOUC VULCANISÉE À L'AIDE DE PEROXYDE

(43) Date of publication of application: 06.09.2017
(73) Proprietor: Compagnie Générale des Etablissements Michelin, 63000 Clermont-Ferrand (FR)
(72) Inventor: WINSTON, Paul, Greenville, SC 29605 (US); SAINTIGNY, Xavier, Greenville, SC 29605 (US)
(74) Representative: Casalonga
(86) International application number: PCT/US2014/063500
(87) International publication number: WO 2016/069007

(56) References cited:
- WO-A1-2011/162771
- WO-A1-2013/040425
- WO-A1-2013/147827
- JP-A- S62 143 945

## Description

### BACKGROUND OF THE INVENTION

### Field of the Invention

This invention relates generally to passenger and light truck tires and more particularly to treads and materials from which they are made.

### Description of the Related Art

It is known in the industry that tire designers must compromise on certain characteristics of the tires they are designing. Changing a tire design to improve one characteristic of the tire will often result in a compromise, *i.e.,* an offsetting decline in another tire characteristic. One such compromise exists between wet braking and snow traction. Wet braking may be improved by increasing filler loading, decreasing filler particle size and increasing the mix glass transition temperature (Tg). However, these actions typically result in a loss of snow traction performance that is known to be improved by, for example, decreasing filler loading, increasing filler particle size and decreasing mix Tg.

Tire designers and those conducting research in the tire industry search for materials and tire structures that can break some of the known compromises. It would be desirable to provide new tire designs that break the compromise between wet and snow traction.

### SUMMARY OF THE INVENTION

Particular embodiments of the present invention include a tread for a tire that is manufactured from a rubber composition that is based upon a cross-linkable elastomer composition. One such disclosed rubber composition is based upon an elastomer composition that includes, per 100 phr, 100 phr of two elastomer types including at least 50 phr of a styrene-butadiene copolymer (SBR) with a polybutadiene (BR) as the remainder. Such compositions further include between 75 phr and 130 phr of a carbon black.

Also included in such elastomer compositions are a plasticizing system that includes a plasticizing resin having a glass transition temperature (Tg) of at least 25 °C and a plasticizing liquid. The plasticizing system is added in an effective amount to provide the cured rubber composition with a shear modulus G* measured at 60 °C of between 0.7 MPa and 1.6 MPa and a Tg of between -35 °C and 0 °C.

The cross-linkable elastomer composition further includes a peroxide curing agent for curing the elastomer composition. In some embodiments a non-ionic curing coagent may also be included as a component of the elastomer composition.

The foregoing and other objects, features and advantages of the invention will be apparent from the following more detailed descriptions of particular embodiments of the invention.

### DETAILED DESCRIPTION OF PARTICULAR EMBODIMENTS

Particular embodiments of the present invention include treads that have improved traction, *i.e.,* improved performance in both wet braking and snow traction as well as in dry braking. Also included are embodiments of tires having such treads. This improved traction and braking performance has been achieved by forming unique tire treads from a rubber composition having a high loading of carbon black coupled with an effective amount of a plasticizing system added to adjust the shear modulus G* measured at 60 °C to be between 0.7 MPa and 1.6 MPa and a Tg of between -35 °C and 0 °C. Such tires are particularly useful as all-weather tires, winter tires and/or summer tires for passenger cars and/or light trucks.

As used herein, "phr" is parts per hundred parts of rubber by weight and is a common measurement in the art wherein components of a rubber composition are measured relative to the total weight of rubber in the composition, *i.e.,* parts by weight of the component per 100 parts by weight of the total rubber(s) in the composition.

As used herein, elastomer and rubber are synonymous terms.

As used herein, "based upon" is a term recognizing that embodiments of the present invention are made of vulcanized or cured rubber compositions that were, at the time of their assembly, uncured. The cured rubber composition is therefore "based upon" the uncured rubber composition. In other words, the cross-linked rubber composition is based upon or comprises the constituents of the cross-linkable elastomer composition.

As is known generally, a tire tread is the road-contacting portion of a vehicle tire that extends circumferentially about the tire. It is designed to provide the handling characteristics required by the vehicle; *e*.*g*., traction, dry braking, wet braking, cornering and so forth - all being preferably provided with a minimum amount of noise being generated and at a low rolling resistance.

Treads of the type that are disclosed herein include tread elements that are the structural features of the tread that contact the ground. Such structural features may be of any type or shape, examples of which include tread blocks and tread ribs. Tread blocks have a perimeter defined by one or more grooves that create an isolated structure in the tread while a rib runs substantially in the longitudinal (circumferential) direction and is not interrupted by any grooves that run in the substantially lateral direction or any other grooves that are oblique thereto.

The radially outermost faces of these tread elements make up the contact surface of the tire tread - the actual surface area of the tire tread that is adapted for making contact with the road as the tire rotates. The total contact surface of the tire tread is therefore the total surface area of all the radially outermost faces of the tread elements that are adapted for making contact with the road.

Suitable compositions for making the treads disclosed herein include a particular rubber component, a plasticizing system, reinforcement filler and a peroxide curing agent. The rubber components included in the rubber composition are highly unsaturated rubbers that include two types - styrene-butadiene copolymers (SBR) and polybutadienes (BR), both quite commonly used in the tire industry. Polybutadienes are useful in many rubber articles and are homopolymers of conjugated 1,3-butadiene. The polybutadienes are particularly useful in maintaining a desirable wear characteristic of the tread since the addition of BR typically improves the wear property.

SBR is a copolymer of styrene and 1, 3-butadiene and is one of the most commonly used synthetic rubbers. The microstructure of SBR is typically described in terms of the amount of bound styrene and the form of the butadiene portion of the polymer. A typical SBR that is often suitable for use in tires is around 25 wt. % bound styrene. Materials having a very high content of bound styrene, *e.g.,* around 80 wt. %, are identified as high styrene resins and are not suitable as an elastomer for manufacturing treads. Particular embodiments of the present invention may utilize an SBR having a bound styrene content of between 3 wt. % and 40 wt. % or alternatively between 10 wt. % and 35 wt. %, between 15 wt. % and 30 wt. % or between 20 wt. % and 40 wt. % bound styrene.

Because of the double bond present in the butadiene portion of the SBR, the butadiene portion is made up of three forms: *cis*-1,4, *trans-*1,4 and vinyl-1,2. In particular embodiments, the SBR materials may be characterized as having a high *trans-1,4* content of at least 30 wt. % or alternatively between 30 wt. % and 70 wt. %, between 35 wt. % and 55 wt. % or between 35 wt. % and 40 wt. %.

Methods for determining the microstructure of the butadiene portion of the SBR materials are well known to those having ordinary skill in the art and include, for example, NMR methods and infrared spectroscopy methods. In one suitable NMR spectroscopy method, a carbon-13 NMR analyses may be performed using, for example, a Bruker AM250 spectrometer. The nominal frequency of carbon-13 is 62.9 MHz and the spectra are recorded without the "nuclear Overhauser effect" (NOE) to ensure quantitative results. The spectral width is 240 ppm. The angle pulse used is a 90° pulse, the duration of which is 5 µs. Low-power decoupling with a wide proton band are used to eliminate scalar ¹H-carbon-13 coupling during carbon-13 acquisition. The sequence repetition time is 4 seconds. The number of transients accumulated to increase the signal/noise ratio is 8192. The spectra are calibrated against the CDCl₃ band at 77 ppm.

The rubber compositions useful for the treads disclosed herein may include a functionalized SBR component. Functionalized rubbers, *i.e.,* those appended with active moieties, are well known in the industry. The elastomers may be functionalized by attaching these active moieties to the polymer backbone, along the branches of the polymer or at the branch ends of the polymer. Examples of functionalized elastomers include silanol or polysiloxane functionalized elastomers, examples of which may be found in US Patent No. 6,013,718, which is hereby fully incorporated by reference. Other examples of functionalized elastomers include those having alkoxysilane groups as described in US 5,977,238, carboxylic groups as described in US 6,815,473, polyether groups as described in US 6,503,973 or amino groups as described in US 6,800,582 and are all incorporated herein by reference.

In particular embodiments of the present invention, the SBR is a functionalized elastomer having functional moieties attached to at least a portion of the total number of branch ends or alternatively, along the branches of the butadiene portion of the polymer. Such functional moieties may include, for example, amino groups, silanol groups, alkoxysilane groups, carboxylic groups or polyether groups. In particular embodiments, the functional moieties may be selected from amino groups, silanol groups or alkoxysilane groups or alternatively, just silanol groups. In particular embodiments, the functionalized SBR may include a mixture of two or more different such functionalized SBR's or limited to one of the functionalized SBR's.

The rubber compositions disclosed herein may include between 50 phr and 90 phr of the SBR or alternatively between 50 phr and 80 phr, between 55 phr and 80 phr or between 55 phr and 70 phr. Likewise the rubber compositions may include between 10 phr and 50 phr of the polybutadiene rubber or alternatively between 20 phr and 50 phr, between 20 phr and 45 phr or between 30 phr and 45 phr.

In addition to the rubber components described above, the rubber composition suitable for the tire treads disclosed herein further include a plasticizing system. The plasticizing system provides both an improvement to the processability of the rubber mix and a means for adjusting the rubber composition's dynamic shear modulus and glass transition temperature. Suitable plasticizing systems include both a plasticizing liquid and a plasticizing resin to achieve the desired braking and snow traction characteristics of the tread.

Suitable plasticizing liquids may include any liquid known for its plasticizing properties with diene elastomers. At room temperature (23 °C), these liquid plasticizers or these oils of varying viscosity are liquid as opposed to the resins that are solid. Examples include those derived from petroleum stocks, those having a vegetable base and combinations thereof. Examples of oils that are petroleum based include aromatic oils, paraffinic oils, naphthenic oils, MES oils, TDAE oils and so forth as known in the industry. Also known are liquid diene polymers, the polyolefin oils, ether plasticizers, ester plasticizers, phosphate plasticizers, sulfonate plasticizers and combinations of liquid plasticizers.

Examples of suitable vegetable oils include sunflower oil, soybean oil, safflower oil, corn oil, linseed oil and cotton seed oil. These oils and other such vegetable oils may be used singularly or in combination. In some embodiments, sunflower oil having a high oleic acid content (at least 70 weight percent or alternatively, at least 80 weight percent) is useful, an example being AGRI-PURE 80, available from Cargill with offices in Minneapolis, MN. In particular embodiments of the present invention, the selection of suitable plasticizing oils is limited to a vegetable oil having high oleic acid content.

The amount of plasticizing liquid useful in any particular embodiment of the present invention depends upon the particular circumstances and the desired result. In general, for example, the plasticizing liquid may be present in the rubber composition in an amount of between 5 phr and 60 phr or alternatively, between 10 phr and 50 phr, between 10 phr and 40 phr, between 10 phr and 30 phr, between 15 phr and 50 phr or between 5 phr and 25 phr. Since both a plasticizing liquid and a plasticizing hydrocarbon resin are included in the plasticizing system, the amount of both types of plasticizers is adjusted as described below to obtain the desired physical characteristics of the tread.

A plasticizing hydrocarbon resin is a hydrocarbon compound that is solid at ambient temperature (*e.g.,* 23 °C) as opposed to liquid plasticizing compounds, such as plasticizing oils. Additionally a plasticizing hydrocarbon resin is compatible, *i.e.,* miscible, with the rubber composition with which the resin is mixed at a concentration that allows the resin to act as a true plasticizing agent, *e.g.,* at a concentration that is typically at least 5 phr.

Plasticizing hydrocarbon resins are polymers/oligomers that can be aliphatic, aromatic or combinations of these types, meaning that the polymeric base of the resin may be formed from aliphatic and/or aromatic monomers. These resins can be natural or synthetic materials and can be petroleum based, in which case the resins may be called petroleum plasticizing resins, or based on plant materials. In particular embodiments, although not limiting the invention, these resins may contain essentially only hydrogen and carbon atoms.

The plasticizing hydrocarbon resins useful in particular embodiment of the present invention include those that are homopolymers or copolymers of cyclopentadiene (CPD) or dicyclopentadiene (DCPD), homopolymers or copolymers of terpene, homopolymers or copolymers of C₅ cut and mixtures thereof.

Such copolymer plasticizing hydrocarbon resins as discussed generally above may include, for example, resins made up of copolymers of (D)CPD/ vinyl-aromatic, of (D)CPD/ terpene, of (D)CPD/ C₅ cut, of terpene/ vinyl-aromatic, of C₅ cut/ vinyl-aromatic and of combinations thereof.

Terpene monomers useful for the terpene homopolymer and copolymer resins include alpha-pinene, beta-pinene and limonene. Particular embodiments include polymers of the limonene monomers that include three isomers: the L-limonene (laevorotatory enantiomer), the D-limonene (dextrorotatory enantiomer), or even the dipentene, a racemic mixture of the dextrorotatory and laevorotatory enantiomers.

Examples of vinyl aromatic monomers include styrene, alpha- methylstyrene, ortho-, meta-, para-methylstyrene, vinyl-toluene, para-tertiobutylstyrene, methoxystyrenes, chloro-styrenes, vinyl-mesitylene, divinylbenzene, vinylnaphthalene, any vinyl-aromatic monomer coming from the C₉ cut (or, more generally, from a C₈ to C₁₀ cut). Particular embodiments that include a vinyl-aromatic copolymer include the vinyl-aromatic in the minority monomer, expressed in molar fraction, in the copolymer.

Particular embodiments of the present invention include as the plasticizing hydrocarbon resin the (D)CPD homopolymer resins, the (D)CPD/ styrene copolymer resins, the polylimonene resins, the limonene/ styrene copolymer resins, the limonene/ D(CPD) copolymer resins, C₅ cut/ styrene copolymer resins, C₅ cut/ C₉ cut copolymer resins, and mixtures thereof.

Commercially available plasticizing resins that include terpene resins suitable for use in the present invention include a polyalphapinene resin marketed under the name Resin R2495 by Hercules Inc. of Wilmington, DE. Resin R2495 has a molecular weight of about 932, a softening point of about 135°C and a glass transition temperature of about 91°C. Another commercially available product that may be used in the present invention includes DERCOLYTE L120 sold by the company DRT of France. DERCOLYTE L120 polyterpene-limonene resin has a number average molecular weight of about 625, a weight average molecular weight of about 1010, an Ip of about 1.6, a softening point of about 119°C and has a glass transition temperature of about 72° C. Still another commercially available terpene resin that may be used in the present invention includes SYLVARES TR 7125 and/or SYLVARES TR 5147 polylimonene resin sold by the Arizona Chemical Company of Jacksonville, FL. SYLVARES 7125 polylimonene resin has a molecular weight of about 1090, has a softening point of about 125° C, and has a glass transition temperature of about 73°C while the SYLVARES TR 5147 has a molecular weight of about 945, a softening point of about 120 °C and has a glass transition temperature of about 71° C.

Other suitable plasticizing hydrocarbon resins that are commercially available include C₅ cut/ vinyl-aromatic styrene copolymer, notably C₅ cut / styrene or C₅ cut / C₉ cut from Neville Chemical Company under the names SUPER NEVTAC 78, SUPER NEVTAC 85 and SUPER NEVTAC 99; from Goodyear Chemicals under the name WINGTACK EXTRA; from Kolon under names HIKOREZ T1095 and HIKOREZ T1100; and from Exxon under names ESCOREZ 2101 and ECR 373.

Yet other suitable plasticizing hydrocarbon resins that are limonene/styrene copolymer resins that are commercially available include DERCOLYTE TS 105 from DRT of France; and from Arizona Chemical Company under the name ZT115LT and ZT5100.

It may be noted that the glass transition temperatures of plasticizing resins may be measured by Differential Scanning Calorimetry (DSC) in accordance with ASTM D3418 (1999). In particular embodiments, useful resins may be have a glass transition temperature that is at least 25° C or alternatively, at least 40° C or at least 60° C or between 25° C and 95° C, between 40° C and 85° C or between 60° C and 80° C.

The amount of plasticizing hydrocarbon resin useful in any particular embodiment of the present invention depends upon the particular circumstances and the desired result and may be present in an amount of between 5 phr and 100 phr or alternatively, between 30 phr and 60 phr, between 20 phr and 60 phr, between 30 phr and 90 phr, between 30 phr and 55 phr or between 35 phr and 50 phr. As noted above, since both a plasticizing liquid and a plasticizing hydrocarbon resin are included in the plasticizing system, the amount of both types of plasticizers are adjusted as described below to obtain the desired physical characteristics of the tread to improve both the snow traction and braking properties.

The amount of the plasticizing system is adjusted to provide the rubber composition with a glass transition temperature of between -35 °C and 0 °C and a dynamic modulus G* at 60 °C of between 0.7 MPa and 1.6 MPa or alternatively between 0.9 MPa and 1.4 MPa, between 0.8 MPa and 1.4 MPa, between 1.0 MPa and 1.4 MPa or between 1.0 MPa and 1.1 MPa, both measured in accordance with ASTM D5992-96. As such, the ratio of the amount of liquid plasticizer (phr) to the amount of plasticizing resin (phr) may be adjusted to achieve the desired physical properties of the rubber composition so that the surprising break in the braking-snow traction compromise is achieved. Such ratios may range from between 0.1 and 0.7 or alternatively between 0.2 and 0.5 or 0.3 and 0.5.

The rubber compositions disclosed herein are suitable for use in the manufacture of treads and as known to one skilled in the art, the Tg of the cured rubber composition may be adjusted to provide a tread for a tire that is more suitable for a given season. As such the Tg of the rubber compositions may be adjusted around the broad range mentioned above using the plasticizers disclosed to provide a Tg of between -35 °C and -25 °C for winter tires, between -30 °C and -17 °C for all-season tires and between -17 °C and 0 °C for summer tires.

In addition to the rubber components and the plasticizing system described above, the rubber compositions suitable for the tire treads disclosed herein may further include a carbon black filler. The carbon black is a reinforcing filler and is used extensively in tires to provide desirable characteristics such as tear strength, modulus and wear. Useful compositions as disclosed herein do not include any significant amount of silica, *i.e.,* no silica at all or an amount that does not have an effect on the cured rubber properties.

In particular embodiments of the present invention, the compounding amount of the carbon black may be between 75 phr and 130 phr or alternatively between 85 phr and 120 phr or between 90 phr and 110 phr.

Suitable carbon blacks are any carbon blacks, in particular the blacks that are conventionally used in tires and particularly in treads. Non-limitative examples of carbon blacks include, for example, the N115, N134, N234, N330, N339, N343, N347 and N375 carbon blacks. Other useful carbon blacks include, for example, N440, N539, N550, N650, N660, N754 and N765.

In addition to the rubber components, the plasticizing system and the reinforcing filler described above, the rubber compositions suitable for the tire treads disclosed herein further be cured by a peroxide curing agent. The peroxide curing agent, or vulcanization system, provides the cross-linking mechanism for the formation of covalent bonds between the elastomer chains resulting from the decomposition of the peroxide to form radicals and the subsequent crosslink-forming reactions. The peroxide curing agent is necessary to provide the break in the compromise between the braking and snow traction as discussed above.

Examples of suitable peroxide curing agents include di-cumyl peroxide; tert-butyl cumyl peroxide; 2,5-dimethyl-2,5 bis(tertbutyl peroxy)hexyne-3; bis(tert-butyl peroxy isopropyl)benzene; 4,4-di-tert-butyl peroxy N-butyl valerate; 1,1-di-tert-butylperoxy-3,3,5-trimethylcyclohexane; bis-(tert-butyl peroxy)-diisopropyl benzene; t-butyl perbenzoate; di-tert-butyl peroxide; 2,5-dimethyl-2,5-di-tert-butylperoxide hexane, as well as other peroxides known to those having ordinary skill in the art and combinations thereof. Such peroxides are available, for example, as VUL-CUP-R, which is α,α'-bis-(tert-butyl peroxy)-diisopropyl benzene and DI CUP, which is di-cumyl peroxide, both available from Arkema having offices in Philadelphia, PA.

The peroxide curing agent may be added to the rubber composition in an effective amount such as between 0.8 phr and 2.4 phr of active peroxide or alternatively between 0.4 phr and 0.5 phr. Since the peroxide products often include inactive ingredients added to the active peroxide, the amount of peroxide disclosed is the amount of active peroxide that should be added to the useful rubber compositions.

In addition to the peroxide curing agent, a coagent may also be included in the peroxide curing package for particular embodiments of the rubber compositions disclosed herein. Coagents affect the cross-linking efficiency and may improve the properties of the cured rubber compositions.

Useful curing coagents include those that are non-ionic. Such coagents are known to typically contribute to the state of the cure of the vulcanized rubber and form radicals typically through hydrogen abstraction. Examples of non-ionic coagents include, for example, allyl-containing cyanurates, isocyanurates and phthalates, homopolymers of dienes and copolymers of dienes and vinyl aromatics, such as triallyl cyanurates, triallyl isocyanurate, 90% vinyl polybutadiene and 70% vinyl styrene-butadiene copolymer. RICON 153 is available from Cray Valley (with offices in Exton, PA) and is 85% 1, 2 vinyl polybutadiene, a useful non-ionic coagent having a number average MW of 4700. Any of these coagents may be used singly or in combinations with one or more of the others.

It has been shown that polar coagents are not useful for the present invention and they are excluded from the rubber compositions disclosed herein. These polar coagents typically increase both the rate and state of the cure and form very reactive radicals through addition reactions. Examples of these polar coagents include multifunctional acrylate and methacrylate esters and dimaleimides, such as the zinc salts of acrylic and methacrylic acid, ethylene glycol diacrylate, trimethylolpropane triacrylate, trimethylolpropane trimethacrylate and N,N'-m-phenylene dimaleimides.

The non-ionic coagents may be added to particular embodiments of the rubber compositions disclosed herein in an amount of between 1 phr and 7 phr or alternatively, between 2 phr and 6 phr or between 3 phr and 5 phr.

Other additives can be added to the rubber compositions disclosed herein as known in the art. Such additives may include, for example, some or all of the following: antidegradants, antioxidants, fatty acids, waxes, stearic acid and zinc oxide. Examples of antidegradants and antioxidants include 6PPD, 77PD, IPPD and TMQ and may be added to rubber compositions in an amount, for example, of from 0.5 phr and 5 phr. Zinc oxide may be added in an amount, for example, of between 1 phr and 6 phr or alternatively, of between 1.5 phr and 4 phr. Waxes may be added in an amount, for example, of between 1 phr and 5 phr.

The rubber compositions that are embodiments of the present invention may be produced in suitable mixers, in a manner known to those having ordinary skill in the art, typically using two successive preparation phases, a first phase of thermo-mechanical working at high temperature, followed by a second phase of mechanical working at lower temperature.

The first phase of thermo-mechanical working (sometimes referred to as "non-productive" phase) is intended to mix thoroughly, by kneading, the various ingredients of the composition, with the exception of the vulcanization system. It is carried out in a suitable kneading device, such as an internal mixer or an extruder, until, under the action of the mechanical working and the high shearing imposed on the mixture, a maximum temperature generally between 120° C and 190° C is reached.

After cooling of the mixture, a second phase of mechanical working is implemented at a lower temperature. Sometimes referred to as "productive" phase, this finishing phase consists of incorporating by mixing the vulcanization (or cross-linking) system, *i.e.,* the peroxide curing agent (coagents may be added in first phase), in a suitable device, for example an open mill. It is performed for an appropriate time (typically for example between 1 and 30 minutes) and at a sufficiently low temperature lower than the vulcanization temperature of the mixture, so as to protect against premature vulcanization.

The rubber composition can be formed into useful articles, including treads for use on vehicle tires and in particular embodiments for tire treads for use on passenger cars and/or light trucks. The treads may be formed as tread bands and then later made a part of a tire or they be formed directly onto a tire carcass by, for example, extrusion and then cured in a mold. As such, tread bands may be cured before being disposed on a tire carcass or they may be cured after being disposed on the tire carcass. Typically a tire tread is cured in a known manner in a mold that molds the tread elements into the tread, including, *e.g.,* the grooves, ribs and/or blocks molded into the tread.

As is known to those skilled in the art, tires treads may be constructed in a layered form, such as a cap and base construction, wherein the cap is formed of one rubber composition and the base is formed in another rubber composition. It is recognized that in such tread constructions, the disclosed rubber compositions are useful for that part of the tread that actually makes contact with the running surface, *e.g.,* the road surface.

It should be noted that the foregoing included detailed references to particular embodiments of the present invention, which were provided by way of explanation of the invention. For example, features illustrated or described as part of one embodiment can be used with another embodiment to yield still a third embodiment. The invention is further illustrated by the following examples, which are to be regarded only as illustrations and not delimitative of the invention in any way. The properties of the compositions disclosed in the examples were evaluated as described below and these methods are suitable for measurement of the claimed properties of the present invention.

Modulus of elongation (MPa) was measured at 10% (MA10), 100% (MA100) and 300% (MA300) at a temperature of 23 °C based on ASTM Standard D412 on dumb bell test pieces. The measurements were taken in the second elongation; *i.e.,* after an accommodation cycle. These measurements are secant moduli in MPa, based on the original cross section of the test piece.

Wet braking for a tire mounted on an automobile fitted with an ABS braking system was determined by measuring the distance necessary to go from 50 MPH to 0 MPH upon sudden braking on wetted ground (asphalt concrete). A value greater than that of the control, which is arbitrarily set to 100, indicates an improved result, that is to say a shorter wet braking distance.

Dry braking of a tire mounted on an automobile fitted with an ABS braking system was measured by determining the distance necessary to go from 60 mph to a complete stop upon sudden braking on a dry asphalt surface. A value greater than that of the control, which is arbitrarily set to 100, indicates an improved result, *i.e.,* a shorter braking distance and improved dry grip.

Snow grip (%) on snow-covered ground was evaluated by measuring the forces on a single driven test tire in snow according to the ASTM F1805 test method. The vehicle travels at a constant 5 mph speed and the forces are measured on the single test tire at the target slip. A value greater than that of the Standard Reference Test Tire (SRTT), which is arbitrarily set to 100, indicates an improved result, *i.e.,* improved grip on snow.

Dynamic properties (Tg and G*) for the rubber compositions were measured on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress of a constant 0.7 MPa and at a frequency of 10 Hz over a temperature sweep from -60 °C to 100 °C with the temperature increasing at a rate of 1.5 °C/min. The shear modulus G* at 60 °C was captured and the temperature at which the max tan delta occurred was recorded as the glass transition temperature, Tg.

### Example 1

Rubber compositions were prepared using the components shown in Table **1.** The amount of each component making up these rubber compositions are provided in parts per hundred parts of rubber by weight (phr).

**Table 1 - Rubber Formulations**

| **Formulations** | **W1** | **F1** | **F2** | **F3** | **F4** | **C1** |
|---|---|---|---|---|---|---|
| SBR | 57 | 57 | 57 | 57 | 57 | 57 |
| BR | 43 | 43 | 43 | 43 | 43 | 43 |
| Carbon Black, N234 | 97 | 97 | 97 | 97 | 97 | 97 |
| Oil | 16 | 16 | 16 | 16 | 16 | 16 |
| Resin | 41 | 41 | 41 | 41 | 41 | 41 |
| Antidegradants | 3.5 | 3.5 | 3.5 | 3.5 | 3.5 | 3.5 |
| Processing Aid | 1.5 | 1.5 | 1.5 | 1.5 | 1.5 | 1.5 |
| Stearic Acid | 1.8 | 1.8 | 1.8 | 1.8 | 1.8 | 1.8 |
| Zinc Oxide | 2 | 2 | 2 | 2 | 2 | 2 |
| Sulfur | 1.5 | | | | | |
| CBS | 1.5 | | | | | |
| Peroxide* | | 3 | 3 | 3 | 3 | 3 |
| Non-ionic Coagent | | | 4 | 4 | 4 | |
| Polar Coagent | | | | | | 5.3 |
| | | | | | | |

| **Physical Properties** | | | | | | |
|---|---|---|---|---|---|---|
| Shear Modulus G*60 @ 60 °C & 0.7 MPa | 1.10 | 1.11 | 1.03 | 1.09 | 1.02 | 1.43 |
| Tg,°C | -22 | -26 | -26 | -27 | -27 | -25 |
| MA10 @ 23°C, MPa | 4.96 | 4.72 | 4.32 | 4.46 | 4.55 | 6.01 |
| MA100 @ 23 °C, MPa | 1.50 | 1.39 | 1.26 | 1.31 | 1.32 | 2.12 |
| MA300 @ 23 °C, MPa | 1.45 | 1.40 | 1.29 | 1.33 | 1.38 | 2.26 |

| | | | | | | |
|---|---|---|---|---|---|---|
| *Peroxide component contained only 40% active peroxide | | | | | | |

The resin was the C5-C9 resin Oppera 373N available from ExxonMobil and having a z average molecular weight greater than 20,000, a weight average molecular weight of about 2500, a softening point of about 89 °C and has a glass transition temperature of about 39 ° C. The plasticizing oil was AGRI-PURE 80 and the antidegradants included wax and 6PPD. The SBR was a functionalized SBR having *trans*-1,4 content of 38.1 wt. % functionalized at chain ends with a silanol group.

The polar coagent in the comparative composition C**1** was the polar compound zinc dimethacrylate. The non-ionic coagents in F**2**, F**3** and F**4** were RICON 153 (85% 1, 2 vinyl polybutadiene), a triallyl isocyanurate and a triallyl cyanurate respectively (the allyl being a 1-propene moiety. The peroxide curing agent was VULCUP R, which includes 60% non-active ingredients so that the amount of active peroxide was 1.2 phr of active peroxide.

The rubber formulations were prepared by mixing the components given in Table **1,** except for the peroxide or sulfur and the coagents or accelerators, in a Banbury mixer by the process described above. The vulcanization package was added in the second phase on a mill. Vulcanization was effected (25 minutes at 170°C) and the formulations were then tested to measure their physical properties as reported in Table **1.**

### Example 2

Tires (P205/55R16 all-season variety) were manufactured using the rubber compositions shown in Table **1** to form the treads. The tires were tested for their wet braking, dry braking and snow traction in accordance with the test procedures described above. The test results are shown in Table **2.** All tire test results were normalized against the tires manufactured with the formulation W1.

**Table 2 - Tire Results**

| | **W1** | **F1** | **F2** | **F3** | **F4** | **C1** |
|---|---|---|---|---|---|---|
| Wet Braking | 100 | 108 | 110 | 110 | 110 | 100 |
| Dry Braking | 100 | 102 | 103 | 104 | 102 | 101 |
| Snow Traction | 100 | 109 | 106 | 106 | 112 | 106 |

As can be seen in the Table, each of the tire treads manufactured with the rubber compositions F**1**-F**4** provided improved wet braking, dry braking and snow traction over the witness. However, the comparative rubber composition C**1** provided treads having only slight improvement in dry braking and no improvement in wet braking.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention without departing from its true spirit. The foregoing description is provided for the purpose of illustration only and should not be construed in a limiting sense. Only the language of the following claims should limit the scope of this invention.

## Claims

1. A tread for a tire, the tread comprising a rubber composition that is based upon a cross-linkable elastomer composition, the cross-linkable elastomer composition comprising, per 100 parts by weight of rubber (phr):
100 phr of two elastomer types including at least 50 phr of a styrene-butadiene copolymer (SBR) and a polybutadiene (BR) as the remainder;
between 75 phr and 130 phr of a carbon black;
an effective amount of a plasticizing system that includes a plasticizing resin having a glass transition temperature (Tg) of at least 25 °C and a plasticizing liquid, wherein the effective amount of the plasticizing system provides the rubber composition with a shear modulus G* measured at 60 °C of between 0.7 MPa and 1.6 MPa and a Tg of between -35 °C and 0 °C;
a peroxide curing agent.

2. The tread of claim 1, wherein the cross-linkable elastomer composition comprises between 50 phr and 90 phr of the SBR copolymer.

3. The tread of any of the preceding claims, wherein the cross-linkable elastomer composition comprises between 55 phr and 80 phr of the SBR copolymer.

4. The tread of any of the preceding claims, wherein the cross-linkable elastomer composition comprises between 5 phr and 50 phr of the plasticizing liquid.

5. The tread of any of the preceding claims, wherein the cross-linkable elastomer composition comprises between 10 phr and 30 phr of the plasticizing liquid.

6. The tread of any of the preceding claims, wherein the plasticizing liquid is vegetable oil having an oleic acid content of at least 70 weight percent.

7. The tread of any of the preceding claims, wherein the effective amount of the plasticizing system provides the rubber composition with the shear modulus G* measured at 60 °C of between 1.0 MPa and 1.4 MPa.

8. The tread of any of the preceding claims, wherein the effective amount of the plasticizing system provides the rubber composition with the shear modulus G* measured at 60 °C of between 0.8 MPa and 1.4 MPa.

9. The tread of any of the preceding claims, wherein the effective amount of the plasticizing system provides the rubber composition with the Tg of between -35 °C and -25 °C.

10. The tread of any of the preceding claims, wherein the effective amount of the plasticizing system provides the rubber composition with the Tg of between -30 °C and -17 °C.

11. The tread of any of the preceding claims, wherein the effective amount of the plasticizing system provides the rubber composition with the Tg of between -17 °C and 0 °C.

12. The tread of any of the preceding claims, wherein the cross-linkable elastomer composition comprises between 85 phr and 120 phr of the carbon black.

13. The tread of any of the preceding claims, wherein the cross-linkable elastomer composition comprises between 0.8 phr and 2.4 phr of the peroxide curing agent.

14. The tread of any of the preceding claims, wherein the cross-linkable elastomer composition further comprises a non-ionic curing coagent.

15. The tread of claim 14, wherein the non-ionic curing coagent is selected from allyl-cyanurates, allyl-isocyanurates, phthalates or combinations thereof.

16. The tread of any of claims 1 through 14, wherein the non-ionic curing coagent is a selected from a vinyl SBR copolymer or a vinyl BR wherein the coagent is at least 70 percent vinyl.

17. The tread of any of the preceding claims, wherein the cross-linkable elastomer composition includes no polar curing coagent.

## Patentansprüche

1. Gummikomponente für einen Reifen, wobei die Gummikomponente eine Gummizusammensetzung umfasst, die auf einer vernetzbaren Elastomerzusammensetzung beruht, wobei die vernetzbare Elastomerzusammensetzung pro 100 Gewichtsteile Gummi (phr) umfasst:
100 phr von zwei Elastomerarten, einschließlich mindestens 50 phr eines Styrol-Butadien-Copolymers (SBR) und eines Polybutadiens (BR) als Rest;
zwischen 75 phr und 130 phr eines Carbon Black;
eine effektive Menge eines Plastifizierungssystems, das ein Plastifizierungsharz enthält, das eine Glasübergangstemperatur (Tg) von mindestens 25 °C und eine Plastifizierungsflüssigkeit umfasst, wobei die effektive Menge des Plastifizierungssystems die Gummizusammensetzung mit einem Schermodul G*, der, bei 60 °C gemessen, zwischen 0,7 MPa und 1,6 MPa und einer Tg zwischen -35 °C und 0 °C versorgt;
ein Peroxid-Härtungsmittel.

2. Lauffläche nach Anspruch 1, wobei die vernetzbare Elastomerzusammensetzung zwischen 50 phr und 90 phr des SBR-Copolymers enthält.

3. Lauffläche nach einem der vorherigen Ansprüche, wobei die vernetzbare Elastomerzusammensetzung zwischen 55 phr und 80 phr des SBR-Copolymers enthält.

4. Lauffläche nach einem der vorherigen Ansprüche, wobei die vernetzbare Elastomerzusammensetzung zwischen 5 phr und 50 phr der Plastifizierungsflüssigkeit enthält.

5. Lauffläche nach einem der vorherigen Ansprüche, wobei die vernetzbare Elastomerzusammensetzung zwischen 10 phr und 30 phr der Plastifizierungsflüssigkeit enthält.

6. Lauffläche nach einem der vorherigen Ansprüche, wobei die Plastifizierungsflüssigkeit ein pflanzliches Öl ist, das einen Ölsäuregehalt von mindestens 70 Gewichtsprozent hat.

7. Lauffläche nach einem der vorherigen Ansprüche, wobei die effektive Menge des Plastifizierungssystems die Gummizusammensetzung mit dem Schermodul G*, gemessen bei 60 °C, zwischen 1,0 MPa und 1,4 MPa versorgt.

8. Lauffläche nach einem der vorherigen Ansprüche, wobei die effektive Menge des Plastifizierungssystems die Gummizusammensetzung mit dem Schermodul G*, gemessen bei 60 °C, zwischen 0,8 MPa und 1,4 MPa versorgt.

9. Lauffläche nach einem der vorherigen Ansprüche, wobei die effektive Menge des Plastifizierungssystems die Gummizusammensetzung mit dem Tg zwischen -35 °C und - 25 °C versorgt.

10. Lauffläche nach einem der vorherigen Ansprüche, wobei die effektive Menge des Plastifizierungssystems die Gummizusammensetzung mit dem Tg zwischen -30 °C und - 17 °C versorgt.

11. Lauffläche nach einem der vorherigen Ansprüche, wobei die effektive Menge des Plastifizierungssystems die Gummizusammensetzung mit dem Tg zwischen -17 °C und 0 °C versorgt.

12. Lauffläche nach einem der vorherigen Ansprüche, wobei die vernetzbare Elastomerzusammensetzung zwischen 85 phr und 120 phr Carbon Black enthält.

13. Lauffläche nach einem der vorherigen Ansprüche, wobei die vernetzbare Elastomerzusammensetzung zwischen 0,8 phr und 2,4 phr des Peroxid-Härtungsmittels enthält.

14. Lauffläche nach einem der vorherigen Ansprüche, wobei die vernetzbare Elastomerzusammensetzung ferner ein nicht-ionisches Härtungs-Coagens enthält.

15. Lauffläche nach Anspruch 14, wobei das nicht-ionische Härtungs-Coagens aus Allylcyanuraten, Allylisocyanuraten, Phthalaten oder Kombinationen derselben ausgewählt wird.

16. Lauffläche nach einem der Ansprüche 1 bis 14, wobei das nicht-ionische Härtungs-Coagens aus einem Vinyl-SBR-Copolymer oder einem Vinyl-BR ausgewählt wird, wobei das Coagens mindestens 70 Prozent Vinyl ist.

17. Lauffläche nach einem der vorherigen Ansprüche, wobei die vernetzbare Elastomerzusammensetzung kein polares Härtungs-Coagens enthält.

## Revendications

1. Bande de roulement pour pneumatique, laquelle bande de roulement comprend une composition de caoutchouc qui est à base d'une composition d'élastomères réticulables, laquelle composition d'élastomères réticulables comprend, en parties pour cent parties en poids de caoutchouc (pcpc) :
- 100 pcpc d'élastomères de deux types, incluant au moins 50 pcpc d'un copolymère de styrène et butadiène (SBR), et un polybutadiène (BR) pour le reste,
- entre 75 et 130 pcpc d'un noir de carbone,
- une quantité efficace d'un système plastifiant qui inclut une résine plastifiante, dont la température de transition vitreuse Tv vaut au moins 25 °C, et un liquide plastifiant, étant entendu que la quantité efficace du système plastifiant dote la composition de caoutchouc d'un module de cisaillement G*, mesuré à 60 °C, valant entre 0,7 et 1,6 MPa et d'une température Tv valant entre -35 et 0 °C,
- et un agent durcisseur de type peroxyde.

2. Bande de roulement conforme à la revendication 1, dans laquelle la composition d'élastomères réticulables comprend entre 50 et 90 pcpc du copolymère SBR.

3. Bande de roulement conforme à l'une des revendications précédentes, dans laquelle la composition d'élastomères réticulables comprend entre 55 et 80 pcpc du copolymère SBR.

4. Bande de roulement conforme à l'une des revendications précédentes, dans laquelle la composition d'élastomères réticulables comprend entre 5 et 50 pcpc du liquide plastifiant.

5. Bande de roulement conforme à l'une des revendications précédentes, dans laquelle la composition d'élastomères réticulables comprend entre 10 et 30 pcpc du liquide plastifiant.

6. Bande de roulement conforme à l'une des revendications précédentes, dans laquelle le liquide plastifiant est une huile végétale qui contient au moins 70 % en poids d'acide oléique.

7. Bande de roulement conforme à l'une des revendications précédentes, dans laquelle la quantité efficace du système plastifiant dote la composition de caoutchouc d'un module de cisaillement G*, mesuré à 60 °C, valant entre 1,0 et 1,4 MPa.

8. Bande de roulement conforme à l'une des revendications précédentes, dans laquelle la quantité efficace du système plastifiant dote la composition de caoutchouc d'un module de cisaillement G*, mesuré à 60 °C, valant entre 0,8 et 1,4 MPa.

9. Bande de roulement conforme à l'une des revendications précédentes, dans laquelle la quantité efficace du système plastifiant dote la composition de caoutchouc d'une température Tv valant entre -35 et -25 °C.

10. Bande de roulement conforme à l'une des revendications précédentes, dans laquelle la quantité efficace du système plastifiant dote la composition de caoutchouc d'une température Tv valant entre -30 et -17 °C.

11. Bande de roulement conforme à l'une des revendications précédentes, dans laquelle la quantité efficace du système plastifiant dote la composition de caoutchouc d'une température Tv valant entre -17 et 0 °C.

12. Bande de roulement conforme à l'une des revendications précédentes, dans laquelle la composition d'élastomères réticulables comprend entre 85 et 120 pcpc du noir de carbone

13. Bande de roulement conforme à l'une des revendications précédentes, dans laquelle la composition d'élastomères réticulables comprend entre 0,8 et 2,4 pcpc de l'agent durcisseur de type peroxyde.

14. Bande de roulement conforme à l'une des revendications précédentes, dans laquelle la composition d'élastomères réticulables comprend en outre un co-agent durcisseur non ionique.

15. Bande de roulement conforme à la revendication 14, dans laquelle le co-agent durcisseur non-ionique est choisi parmi les allyl-cyanurates, les allyl-isocyanurates, les phtalates, et les combinaisons de tels composés.

16. Bande de roulement conforme à l'une des revendications 1 à 14, dans laquelle le co-agent durcisseur est choisi parmi un copolymère vinyl-SBR et un polymère vinyl-BR, étant entendu que ce co-agent présente une teneur en groupes vinyle d'au moins 70 %.

17. Bande de roulement conforme à l'une des revendications précédentes, dans laquelle la composition d'élastomères réticulables ne contient aucun agent durcisseur polaire.
